# EUROPÄISCHE PATENTSCHRIFT

(11) **EP 2 187 097 B1**
(45) Veröffentlichungstag und Bekanntmachung des Hinweises auf die Patenterteilung: **22.02.2012**
(21) Anmeldenummer: 08169145.3
(22) Anmeldetag: 14.11.2008
(51) Int. Cl.: F16H 25/20

(54) **Linearantrieb**
Linear drive
Entraînement linéaire

(43) Veröffentlichungstag der Anmeldung: 19.05.2010
(73) Patentinhaber: Nozag AG, 8330 Pfäffikon (CH)
(72) Erfinder: Staub, Patrick, 8454 Buchberg (CH)
(74) Vertreter: Liebetanz, Michael

(56) Entgegenhaltungen:
- EP-A- 0 647 799
- DE-U1-202004 000 950
- US-A- 2 444 886
- US-A- 3 682 283

## Beschreibung

### TECHNISCHES GEBIET

Die vorliegende Erfindung betrifft einen Linearantrieb gemäss den Merkmalen des Oberbegriffes des Anspruchs 1.

### STAND DER TECHNIK

Aus dem Stand der Technik sind Linearantriebe oder Linearaktuatoren bekannt. Typischerweise umfassen diese Linearantriebe eine Spindel, welche in Verbindung mit einem Teleskopsystem steht und über ein Getriebe durch einen Motor angetrieben wird. Durch Antreiben der Spindel verschieben sich die Teile des Teleskopsystems relativ zueinander, was in einer Längenänderung des Teleskopsystems resultiert.

Beispielsweise zeigt die EP 0 647 799 einen solchen Linearantrieb, wobei hier ein Sondergetriebe zum Antreiben der Spindel eingesetzt wird.

Nachteilig bei den aus dem Stand der Technik bekannten Linearantrieben ist die Tatsache, dass aufgrund der Ausgestaltung der Axiallagerung der Spindel, Axialkräfte auf das Gehäuse des Getriebes oder gar auf die Getriebeteile wirken. Um diese Axialkräfte entsprechend aufzunehmen, müssen bezüglich des Getriebes immer Sonderlösungen gefunden werden, was die Herstellung eines solchen Linearsystems massiv verteuert.

Auch zeigt die gattungsbildende US 2,444,886 einen Linearantrieb, welcher ebenfalls die genannten Nachteile aufweist.

### DARSTELLUNG DER ERFINDUNG

Ausgehend von diesem Stand der Technik liegt der Erfindung die Aufgabe zugrunde, einen Linearantrieb anzugeben, welcher die Nachteile des Standes der Technik überwindet. Insbesondere liegt der Erfindung eine Aufgabe zugrunde, einen Linearantrieb anzugeben, welcher möglichst einfach und somit kostengünstig herzustellen ist. Eine weitere Aufgabe der vorliegenden Erfindung ist es, das Getriebe austauschbar auszubilden, wobei insbesondere ein handelsübliches Getriebe eingesetzt werden soll.

Diese Aufgabe löst ein Linearantrieb nach Anspruch 1. Demgemäss umfasst ein Linearantrieb eine Spindel mit einem Gewindeabschnitt, die eine Mittelachse definiert, eine mit dem Gewindeabschnitt im Eingriff stehende Spindelmutter, ein Teleskopgestänge mit einem optional angeordneten äusseren Teleskoprohr und einem inneren Teleskoprohr, ein Getriebe und einen Antriebsmotor. Das äussere Teleskoprohr ist relativ zum inneren Teleskoprohr in Richtung der Mittelachse verschiebbar angeordnet, so dass die Länge des Linearantriebes veränderbar ist. Das innere Teleskoprohr steht mit einer ersten Lagerstelle in Verbindung, über welche eine Axialkraft im wesentlichen in Richtung der Mittelachse auf das innere Teleskoprohr einleitbar ist, welche dann durch das innere Teleskoprohr über die Spindelmutter auf die Spindel übertragen wird. Die Spindel steht über ein Axiallager mit einer zweiten Lagerstelle in Verbindung, wobei das Axiallager zur Übertragung von Axialkräften von der Spindel auf die zweite Lagerstelle ausgebildet ist. Das Getriebe umfasst mindestens eine Abtriebshohlwelle, wobei die Spindel mit der Abtriebshohlwelle verbunden ist. Die Abtriebshohlwelle ist an der Spindel derart gelagert, dass diese bezüglich der Mittelachse drehfest zur Spindel ist. Als Abtriebshohlwelle wird dabei ein Getriebeelement verstanden, welches abtriebsseitig am Getriebe angeordnet ist und eine vom Getriebe übertragene Leistung abgibt. Die Hohlwelle umfasst dabei eine Öffnung, in welche Teile der Spindel einragen können.

Die derartige Ausbildung eines Linearantriebes erlaubt eine besonders kostengünstige Herstellung eines Linearantriebes, da aufgrund der Anordnung der Axiallagerung ein handelsübliches Getriebe eingesetzt werden kann, welches nicht mit Axialkräften belastet wird.

Das Getriebe ist als Schneckengetriebe mit einem Schneckenrad und einer Schneckenwelle ausgebildet. Dabei bildet das Schneckenrad die Abtriebshohlwelle. Die Spindel ist mit dem Schneckenrad direkt verbunden, wobei das Schneckenrad an der Spindel derart gelagert ist, dass dieses bezüglich der Mittelachse drehfest zur Spindel ist.

Dabei ist die Verbindung zwischen Abtriebshohlwelle bzw. Schneckenrad und Spindel derart ausgebildet, dass ausschliesslich Drehmomente bzw. Drehbewegungen von der Abtriebshohlwelle bzw. vom Schneckenrad auf die Spindel übertragbar sind. Somit wird die Übertragung von Axialkräften in Richtung der Mittelachse von der Spindel auf das Getriebe, insbesondere auf die Abtriebshohlwelle bzw. auf das Schneckenrad verhindert.

Die Verbindung zwischen Spindel und Abtriebshohlwelle ist eine Formschlussverbindung, wobei die Übertragung von Axialkräften in Richtung der Mittelachse von der Spindel auf die Abtriebshohlwelle verhindert wird.

Die Spindel und die Abtriebshohlwelle umfassen vorzugsweise Mitnahmeelemente, welche ein Drehmoment von der Abtriebshohlwelle auf die Spindel übertragen, wobei sich die Mitnahmeelemente in die Spindel und/oder in die Abtriebshohlwelle erstrecken bzw. von der Spindel und/oder von der Abtriebshohlwelle erstrecken können.

Die Abtriebshohlwelle steht derart mit der Spindel in Verbindung, dass eine axiale Verschiebung zwischen Abtriebshohlwelle und Spindel möglich ist.

Vorzugsweise ist die Verbindung zwischen Spindel und Abtriebshohlwelle eine Passfederverbindung oder eine Passscheibenverbindung oder eine Profilwellenverbindung, wobei die Verbindung derart ausgebildet ist, dass eine axiale Verschiebung zwischen Abtriebshohlwelle und Spindel zugelassen wird. Über diese Verbindung wird das Drehmoment von der Abtriebshohlwelle auf die Spindel übertragen.

Vorzugsweise ist die zweite Lagerstelle als Lagergehäuse ausgebildet, in welchem das Axiallager angeordnet ist, so dass die Axialkräfte vom Axiallager über das Lagergehäuse leitbar sind.

Vorzugsweise stellt das Getriebe mit dem Getriebegehäuse und der Abtriebswelle eine einzige Einheit dar, wobei diese Einheit als Ganzes von der Spindel, dem Teleskopgestänge, und der zweiten Lagerstelle bzw. dem Lagergehäuse trennbar ist.

Weitere Ausführungsbeispiele sind in den abhängigen Ansprüchen beschrieben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Schnittansicht eines Linearantriebes der vorliegenden gemäss der Erfindung nach einem ersten Ausführungsbeispiel;
- Fig. 2: eine Detailansicht des hinteren Teiles des Linearantriebes nach Figur 1 mit Motor, Getriebe und Axiallagerung;
- Fig. 3: eine Detailansicht des hinteren Teiles eines Linearantriebes gemäss der Erfindung nach einem zweiten Ausführungsbeispiel und
- Fig. 4: eine Detailansicht des hinteren Teiles des Linearantriebes nach Figur 3 mit Motor, Getriebe und Axiallagerung.

### BESCHREIBUNG BEVORZUGTER AUSFÜHRUNGSFORMEN

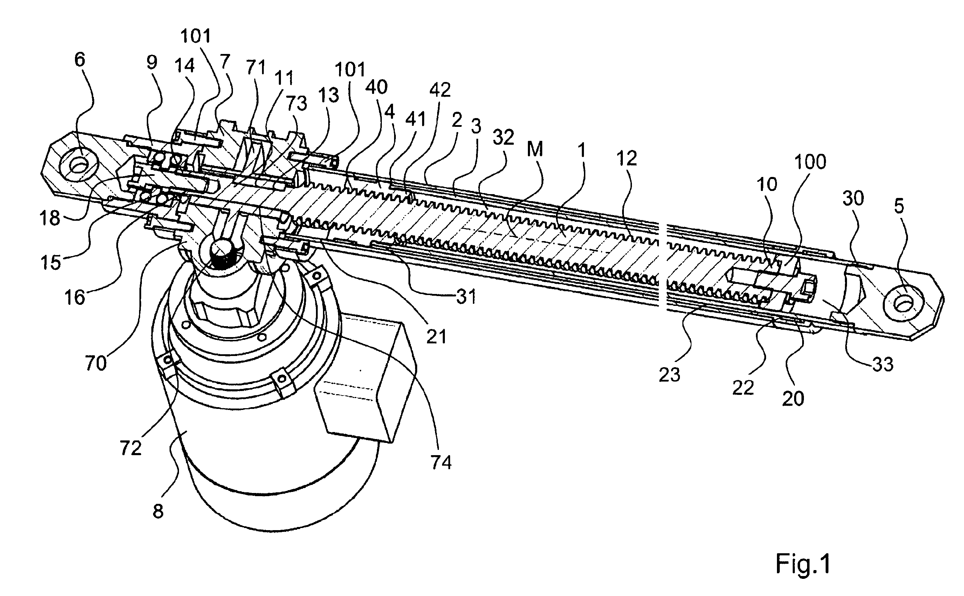

Die Figur 1 zeigt eine erste Ausführungsform eines Linearantriebes. Der Linearantrieb umfasst im wesentlichen eine Spindel 1 mit einer Mittelachse M, ein Teleskopgestänge mit einem äusseren Teleskoprohr 2 und einem inneren Teleskoprohr 3, eine Spindelmutter 4, ein Schneckengetriebe 7, einen Antriebsmotor 8 und ein Lagergehäuse 9. Ferner umfasst der Linearantrieb eine erste Lagerstelle 5 und eine zweite Lagerstelle 6. Die Lagerstellen 5, 6 dienen der Verbindung des Linearantriebes mit zwei externen Elementen, welche durch den Linearantrieb relativ zueinander bewegt werden sollen. Für die Funktion des Teleskopantriebes, wie diese hierin beschrieben wird, ist es wichtig, dass die beiden Lagerstellen 5, 6 bezüglich einer Drehung um die Mittelachse M fest zueinander stehen.

Das Schneckengetriebe 7 ist dabei als bevorzugt gewähltes Getriebe zu verstehen. In anderen Ausführungsformen könnte auch ein Planetengetriebe, ein Kegelradgetriebe oder ein Kronenradgetriebe eingesetzt werden. Wichtig ist, dass das Getriebe mindestens eine Abtriebshohlwelle umfasst, über welche eine Drehung bzw. ein Drehmoment auf die Spindel 1 übertragbar ist. In der nachfolgenden Beschreibung wird der Aufbau des Linearantriebes mit einem Schneckengetriebe 7, welches als Abtriebshohlwelle ein Schneckenrad 71 umfasst, beispielhaft beschrieben.

Die Spindel 1 erstreckt sich entlang einer Mittelachse M, welche auch als Bezugsachse für die nachfolgenden Erklärungen dient. Die Spindel 1 umfasst ein vorderes Ende 10 und ein hinteres Ende 11. Zwischen dem vorderen Ende 10 und dem hinteren Ende 11 erstrecken sich im wesentlichen drei Abschnitte, nämlich ein Gewindeabschnitt 12, ein Antriebsabschnitt 13, über welchen ein Drehmoment auf die Spindel 1 übertragbar ist, sowie ein Lagerungsabschnitt 14. Über den Gewindeabschnitt 12 wird die Spindel mit einer Axialkraft entlang der Mittelachse M belastet. Diese Axialkraft wird über den Lagerungsabschnitt 14 von der Spindel 1 weg geleitet.

Wie bereits eingangs erwähnt, umfasst das Teleskopgestänge ein äusseres Teleskoprohr 2, welches nachfolgend als äussere Teleskophülse 2 bezeichnet wird, und ein inneres Teleskoprohr 3, welches nachfolgend als innere Teleskophülse 3 bezeichnet wird. Beide Teleskophülsen 2, 3 erstrecken sich im wesentlichen zylindrisch entlang der Mittelachse M und haben einen kreisförmigen Querschnitt. Mit anderen Worten kann auch gesagt werden, dass die Teleskophülsen 2, 3 rohrförmig ausgebildet sind. Die Durchmesser der Teleskophülsen 2, 3 sind dabei so gewählt, dass die innere Teleskophülse 3 im Innenraum 23 der äusseren Teleskophülse 2 bewegbar ist. Andere Querschnitt der Teleskophülsen 2, 3 sind ebenfalls denkbar, insbesondere ein elliptischer, rechteckiger, quadratischer oder polygonaler Querschnitt.

Die innere Teleskophülse 3 umfasst ein vorderes Ende 30 und ein hinteres Ende 31. Das vordere Ende 30 ist mit der ersten oder vorderen Lagerstelle 5 und das hintere Ende 31 ist mit der Spindelmutter 4 fest verbunden. Beispielsweise umfasst die innere Teleskophülse 3 im Bereich des vorderen Endes 30 und im Bereich des hinteren Endes 31 je ein Innengewinde, in welches die Spindelmutter und die erster Lagerstelle 5 eingeschraubt werden können. Andere Verbindungsarten, insbesondere wie unten erwähnt sind ebenfalls denkbar. Die Lagerstelle 5 hat hier die Form eines Kolbenstangengelenkes, welches allseitige Einstell- und Pendelbewegungen kompensieren kann. Die Lagerstelle 5 kann aber auch als Gabelkopf ausgebildet sein. Es sei zudem angemerkt, dass die Lagerstelle 5 jede andere Form aufweisen kann.

Die äussere Teleskophülse 2 umfasst ebenfalls ein vorderes Ende 20 und ein hinteres Ende 21. Im Bereich des vorderen Endes 20 ist ein Gleitlager 22 angeordnet, welches die innere Teleskophülse 3 im Innenraum 23 der äusseren Teleskophülse 2 führt. Das hintere Ende 21 steht mit einem Getriebegehäuse 70 des Schneckengetriebes 7 in Verbindung. Die äussere Teleskophülse 2 dient im wesentlichen der Führung der inneren Teleskophülse 3. Über die äussere Teleskophülse 2 wird keine Axialkraft in Richtung der Mittelachse M übertragen. Das heisst mit anderen Worten, dass das Getriebegehäuse 70 nicht von aussen, also über die äussere Teleskophülse 2 belastet.

Die Spindelmutter 4 ist ebenfalls zylindrisch ausgebildet. Ein Innengewinde 40 erstreckt sich entlang der Mittelachse M durch die Spindelmutter 4 und ist mit dem Gewindeabschnitt 12 der Spindel 1 im Eingriff. Die Spindelmutter 4 kann in Richtung der Mittelachse in einen Lagerabschnitt mit mindestens einer Lagerfläche 41 und einen Befestigungsabschnitt 42 unterteilt werden. In der vorliegenden Ausführungsform sind zwei in Richtung der Mittelachse M voneinander beabstandete ringförmige Lagerflächen 41 angeordnet. Diese Lagerflächen 41 dienen der Führung der Spindelmutter 4 im Innenraum 23 der äusseren Teleskophülse 2. Der Befestigungsabschnitt 42 ragt in den Innenraum 32 der inneren Teleskophülse 3 und ist fest mit derjenigen verbunden. Beispielsweise über eine Pressverbindung, Schweissverbindung oder über eine gesicherte Schraubverbindung.

Wenn die Spindel 1 mit der Spindelmutter 4 im Eingriff ist, ragen Teile des Gewindeabschnittes 12 in den Innenraum 32 der inneren Teleskophülse 3. Um die Spindel im Innenraum 32 zentrisch zu halten, ist im Bereich des vorderen Endes 10 ein Zentrierelement 100 mittels einer Schraube an der Spindel 1 befestigt. Das Zentrierelement 100 weist eine zum Innenraum 32 kongruente Form auf. Alternativ könnte das Zentrierelement 100 auch an der Spindel 1 angeformt sein.

Eine Kraft F, welche auf die vordere Lagerstelle 5 wirkt, wird über die vordere Lagerstelle 5 auf die innere Teleskophülse 3 geleitet. Aufgrund der Verbindung zwischen Teleskophülse 3 mit der Spindelmutter 4 wird die Kraft via die Spindelmutter 4 auf die Spindel 1 geleitet. Die äussere Teleskophülse 2 dient im wesentlichen als Führungselement der inneren Teleskophülse 3 und der Spindelmutter 4. Über diese äussere Teleskophülse 2 wird keine Axialkraft in Richtung der Mittelachse M übertragen. Der weitere Kraftverlauf durch das Schneckengetriebe 7 auf die hintere Lagerstelle 6 wird nachfolgend dargelegt.

Das Schneckengetriebe 7 umfasst im wesentlichen das Getriebengehäuse 70, ein Schneckenrad 71 und eine Schneckenwelle 72, welche das Schneckenrad 71 antreibt. Die Schneckenwelle 72 steht mit dem Antriebsmotor 8 in Verbindung, welcher ausserhalb am Getriebegehäuse 70 befestigt ist. Aufgrund der Tatsache, dass keine Axialkraft auf das Schneckengetriebe 7 wirkt, so wie dies hierin dargelegt wird, kann ein handelsübliches Schneckengetriebe eingesetzt werden, was die Herstellung ökonomischer macht.

Wie bereits erwähnt steht das hintere Ende 21 der äusseren Teleskophülse 2 mit dem Getriebegehäuse 70 in Verbindung. In Richtung der Mittelachse M gesehen, schliesst sich dem Getriebegehäuse 70 auf der anderen Seite das Lagergehäuse 9 an, welches hier mit der zweiten Lagerstelle 6, die hier ebenfalls als Lagerauge ausgebildet ist, in Verbindung steht. Die Verbindung zwischen Getriebegehäuse 70 und Teleskophülse 2 bzw. Lagergehäuse 9 wird über Schrauben 101 hergestellt. Aufgrund der Tatsache, dass über die äussere Teleskophülse 2 keine Axialkraft übertragen wird, wird das Getriebegehäuse 70 nicht mit einer Kraft in Axialrichtung in Richtung der Mittelachse M belastet.

In der vorliegenden Ausführungsform ragt der Antriebsabschnitt 13 und der Lagerabschnitt 14 der Spindel 1 durch das Getriebegehäuse 70 hindurch. Beide Abschnitte sind im wesentlichen zylindrisch ausgebildet.

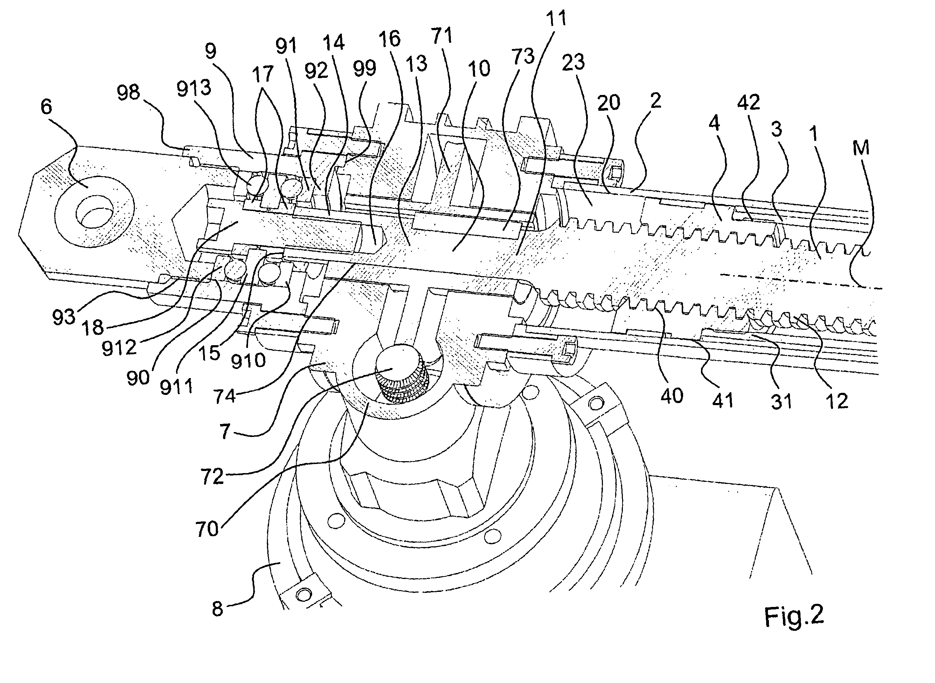

Wie dies in der Figur 2 gezeigt wird, steht der Antriebsabschnitt 13 über eine Formschlussverbindung 73 mit dem Schneckenrad 71 in Verbindung. Über diese Formschlussverbindung kann ein vom Motor 8 bereitgestelltes Drehmoment über die Schneckenwelle 72 und das Schneckenrad 71 auf die Spindel 1 übertragen werden. Unter einer Formschlussverbindung 73 wird eine beliebige mechanische Verbindung verstanden, welche ein Drehmoment übertragen kann, nicht aber eine Kraft in Axialrichtung, also entlang der Mittelachse M. Ferner kann eine Formschlussverbindung eine relative Bewegung zwischen Spindel 1 und Schneckenrad 71 zulassen. Beispielhaft seien hier die gezeigte Passfederverbindung, eine Scheibenfederverbindung, oder eine Profilwellenverbindung genannt. Durch diese Ausgestaltung wird eine axiale Belastung auf das Schneckengetriebe 7, insbesondere auf das Schneckenrad 71, welche aufgrund des mechanischen Aufbaus bei einem Schneckengetriebe nicht zulässig ist, vermieden.

Der Durchmesser der Bohrung 74 im Schneckenrad 71 ist dabei grösser als der Aussendurchmesser des Antriebsabschnittes 13 der Spindel 1. Mit anderen Worten heisst dies, dass es zwischen dem Schneckenrad 71 und der Spindel 1 nicht zu einem Formschluss kommen kann, über welchen eine Axialkraft übertragbar wäre.

Anhand der Detailansicht der Figur 2 wird nun der Aufbau der Axiallagerung erklärt. Der Lagerabschnitt 14 ragt in das Lagergehäuse 9 ein. Das Lagergehäuse 9 dient der Aufnahme der Axialkräfte, welche wie untenstehend übertragen werden. Das Lagergehäuse 9 umfasst einen sich durch das Lagergehäuse entlang der Mittelachse M erstreckenden Innenraum 90, in welchem ein Axiallager, hier ein Axialrillenkugellager 91, platzierbar ist. Ferner weist das Lagergehäuse 9 auf der einen Seite, welche hier zum Teleskopgestänge gerichtet ist, einen Flansch 92 auf, welcher in den Innenraum 90 ragt und auf welchem das Axiallager 91 anstehen kann. Auf der dem Flansch gegenüberliegenden Seite weist das Lagergehäuse 9 hier einen Aufnahmeabschnitt 93 zur Aufnahme der zweiten oder hinteren Lagerstelle 6, welche analog zur ersten Lagerstelle 5 ausgebildet ist, auf. Das Axialrillenkugellager 91 wird also durch den Flansch 92 und durch das Lagerauge 6 im Innenraum 90 gehalten.

Das Axialrillenkugellager 91 ist hier als zweiseitig wirkendes Axialrillenkugellager ausgebildet und umfasst einen ersten Lagerring 910, einen mittleren Lagerring 911 und einen zweiten Lagerring 912. Lagerkugeln 913 sind zwischen dem ersten Lagerring 910 und dem mittleren Lagerring 911, sowie zwischen dem mittleren Lagerring 911 und dem zweiten Lagerring 912 angeordnet. Der erste Lagerring 910 ist gleich ausgebildet wie der zweite Lagerring 912. Der mittlere Lagerring 911 weist den gleichen Aussendurchmesser auf wie der erste Lagerring 910 und der zweite Lagerring 912. Der Innendurchmesser des mittleren Lagerringes 911 ist aber kleiner ausgebildet, so dass ein umlaufender Rand entsteht, über welchen die Axialkräfte auf das Lager geleitet werden können.

Der Spindel 1 ist über den Lagerabschnitt 14 mit dem Axialrillenkugellager 91 verbunden.

Der Lagerabschnitt 14 der Spindel 1 ist hier im wesentlichen zylindrisch ausgebildet. Von seiner Stirnseite 15 erstreckt sich eine Gewindebohrung 16 in den Lagerabschnitt 14 hinein. Der Lagerabschnitt 14 ist hier über zwei Klemmelemente 17, die auf beiden Seiten des mittleren Lagerringes 911 angeordnet sind, mit dem mittleren Lagerring 911 verbunden. Eine Schraube 18 erstreckt sich durch die beiden Klemmelemente 17 und durch das Axialrillenkugellager 91 in die Gewindebohrung 16 und verbindet somit das Axialrillenkugellager 91 mit der Spindel 1. Durch diese Verbindung können Axialkräfte auf das Axialrillenkugellager 91 geleitet werden.

Die Kraftübertragung von der Spindel 1 auf das Axialrillenkugellager 91 bzw. auf die hintere Lagerstelle 6 ist wie folgt: Die Kraft F wird von der Spindel 1 über den Antriebsabschnitt 13 zum Lagerabschnitt 14 geleitet. Über die Verbindung zwischen dem Lagerabschnitt 14 und Axialrillenkugellager 91 wird die Kraft auf das Axialkugellager 91 geleitet, von wo es auf das Lagergehäuse 9 bzw. auf die mit dem Lagergehäuse 9 verbundene Lagerstelle 6 wirkt. Aufgrund der Ausgestaltung der Verbindung zwischen dem Schneckenrad 71 und dem Antriebsabschnitt 13, wie diese oben beschrieben wurde, können keine Axialkräfte auf das Schneckenrad 71 bzw. auf das Getriebegehäuse 7 des Schneckengetriebes wirken.

Zusammenfassend heisst dies, dass eine Druckkraft oder Zugkraft F, welche entlang der Mittelachse M auf das Teleskopgestänge wirken, durch folgende Teile übertragen wird: Von Lagerstelle 5 wirkt die Kraft über die innere Teleskophülse 3, dann über die Spindelmutter 4 und die Spindel 1, auf das Axialrillenkugellager 91, und schliesslich auf die Lagerstelle 6.

Ein besonderer Vorteil der hierin beschriebenen Ausführungsformen ist die Tatsache, dass aufgrund der Anordnung der Axiallagerung und der entsprechenden Ausbildung der Verbindung zwischen Spindel 1 und Schneckengetriebe 7 keine Axialkräfte auf das Schneckengetriebe 7 wirken. Daher kann ein konventionelles Schneckengetriebe ohne besondere Modifikationen eingesetzt werden.

Ein weiterer Vorteil der vorliegenden Erfindung ist die Austauschbarkeit des Schneckengetriebes. Da das Schneckengetriebe 7 mit dem Getriebegehäuse 70 eine geschlossene Einheit bildet, kann es in einfacher Art und Weise ausgetauscht werden. Hierbei müssen lediglich die Schrauben 100 gelöst werden, welche das Teleskopgestänge mit dem Schneckengetriebe 7 bzw. mit dem Lagergehäuse 6 verbinden.

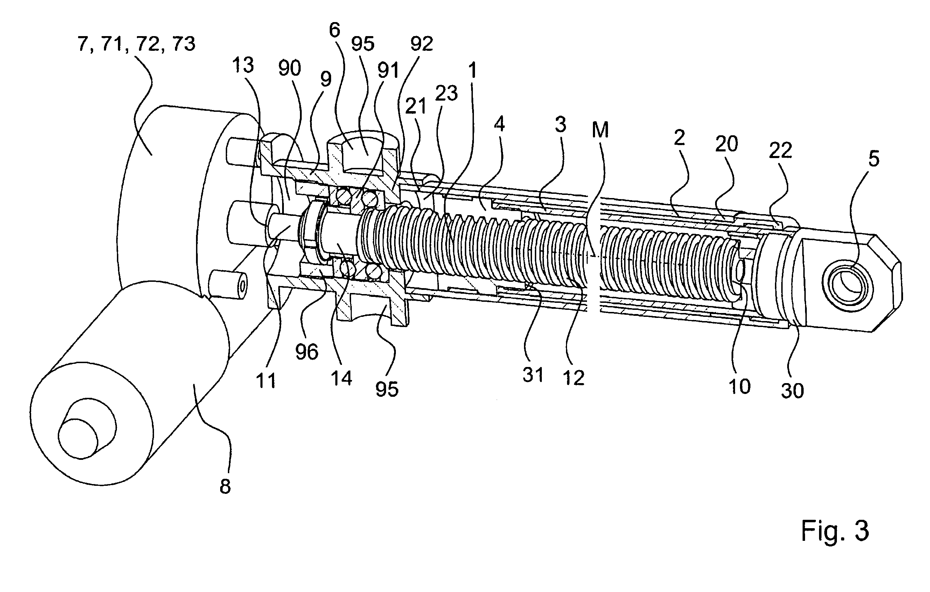

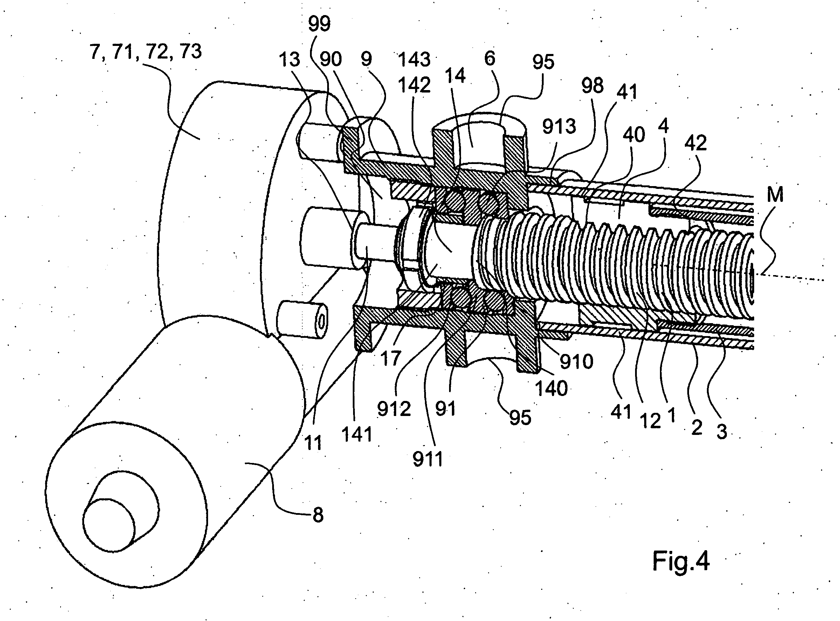

Die Figuren 3 und 4 zeigen eine zweite Ausführungsform eines Linearantriebes. Der Abschnitt des Teleskopgestänges ist dabei im wesentlichen identisch ausgebildet, wie bei der ersten Ausführungsform. Gleiche Teile sind mit gleichen Bezugszeichen versehen.

Ein wesentlicher Unterschied zur ersten Ausführungsform ist die Anordnung der einzelnen Teilabschnitte der Spindel 1. In Richtung der Mittelachse M schliesst sich dem Gewindeabschnitt 12 der Spindel 1 zuerst der Lagerungsabschnitt 14 an, welcher dann vom Antriebsabschnitt 13 gefolgt wird. Dadurch schliesst sich das Lagergehäuse 9 mit seinem vorderen Ende 99 direkt dem Gewindeabschnitt 12 der Spindel 1 an, wobei das Schneckengetriebe 7 am hinteren Ende 98 des Lagergehäuses 9 angeordnet ist. Das heisst mit anderen Worten, dass sich der Antriebsabschnitt 13 aus dem Lagergehäuse 9 nach hinten erstreckt, wo er in das Schneckengetriebe 7 einragt.

Das Lagergehäuse 9 stellt in dieser Ausführungsform mit seiner äusseren Form die zweite Lagerstelle 6 bereit. Hierfür sind zwei Lagerelemente 95 an der Aussenseite des Lagergehäuse 9 am letzteren angeordnet. Die Lagerelemente 95 sind hier dem Lagergehäuse 9 angefonnt, dass heisst sie einstückig mit dem Lagergehäuse 9 ausgebildet. Innenseitig umfasst das Lagergehäuse 9 im wesentlichen einen sich durch das Lagergehäuse 9 erstreckenden Innenraum 90. Dieser dient zur Aufnahme des Axiallagers 91. Der Innenraum 90 kann im wesentlichen in zwei Abschnitte unterteilt werden. Nämlich in den Abschnitt, in welchem das Axiallager 91 liegt, und in einen an diesen Innenraum 90 angrenzenden Aufnahmeabschnitt bzw. Befestigungsabschnitt 93. Auf der dem Befestigungsabschnitt 93 gegenüberliegenden Seite ist wiederum ein Flansch 92 angeordnet, an welchem das Axiallager 91 anstehen kann.

Der Befestigungsabschnitt 93 dient zur Aufnahme eines Klemmelementes 96. Das Axiallager 91 wird im Innenraum 90 durch das Klemmelement 96 gehalten, welches hier in den Befestigungsabschnitt 93 eingeschraubt werden kann.

Ferner umfasst das Lagergehäuse 9 nicht dargestellte Befestigungselemente, wie Öffnungen, zur Befestigung des Schneckengetriebes 7.

Der Lagerungsabschnitt 14 der Spindel 1 umfasst in Richtung der Mittelachse M gesehen, einen Absatz 140, einen zylindrischen Abschnitt 141, sowie ein Befestigungsabschnitt 142. Der Absatz 140 schliesst sich dem Gewindeabschnitt 12 der Spindel 1 an und der Befestigungsabschnitt 142 geht in den Antriebsabschnitt 13 über. Der Absatz 140 steht auf dem mittleren Lagerring 911 auf. Über diesen Absatz 140 wird die Kraft von der Spindel 1 auf das Axiallager 91 übertragen. Der zylindrische Abschnitt 141 ragt durch die zentrale Öffnung des Axiallagers 91. Der Befestigungsabschnitt 142 umfasst im wesentlichen ein Aussengewinde, welches mit einer Mutter 143 im Eingriff steht. Über ein Klemmelement 17, das hier die Form einer Hülse hat, kann die Mutter 143 auf den mittleren Ring 911 des Axiallagers 91 wirken. Das heisst mit anderen Worten, dass der mittlere Ring 911 vom Klemmelement 17 und vom Absatz 140 geklemmt wird.

Der Antriebsabschnitt 13 ragt, wie bereits erwähnt, über das hintere Ende 98 des Lagerungsgehäuses 9 hinaus. Das hintere Ende 98 steht dabei mit dem Gehäuse 70 des Schneckengetriebes 7 in Verbindung, wobei der Antriebsabschnitt 13 im Gehäuse 70 mit dem Schneckenrad in Verbindung steht, so dass vom Schneckenrad ein Drehmoment auf die Spindel 1 übertragen werden kann. Die Verbindung zwischen Schneckenrad und Spindel, ist wie im Zusammenhang mit der ersten Ausführungsform bereits erwähnt, ausgebildet.

Wie bereits im Zusammenhang mit der ersten Ausführungsform erwähnt, wirkt eine Axialkraft F, welche von der ersten Lagerstelle 5 über die innere Teleskophülse 3 und die Spindelmutter 4 auf die Spindel 1 übertragen wird, in Richtung der Mittelachse M von der Spindel 1 auf das Axiallager 91. Über das Axiallager 91 wird die Axialkraft auf das Lagerungsgehäuse 9 geleitet, welches die Kraft über die Lagerstellen 95 ableitet.

### BEZUGSZEICHENLISTE

- 1: Spindel
- 2: äusseres Teleskoprohr (Teleskophülse)
- 3: inneres Teleskoprohr (Teleskophülse)
- 4: Spindelmutter
- 5: erste Lagerstelle
- 6: zweite Lagerstelle
- 7: Getriebe, Schneckengetriebe
- 8: Antriebsmotor
- 9: Lagerungsgehäuse

- 10: vorderes Ende
- 11: hinteres Ende
- 12: Gewindeabschnitt
- 13: Antriebsabschnitt
- 14: Lagerungsabschnitt
- 15: Stirnseite
- 16: Gewindebohrung
- 17: Klemmelemente
- 18: Schraube

- 20: vorderes Ende
- 21: hinteres Ende
- 22: Gleitlager
- 23: Innenraum

- 30: vorderes Ende
- 31: hinteres Ende
- 32: Innenraum

- 40: Innengewinde
- 41: Lagerfläche
- 42: Befestigungsabschnitt

- 70: Getriebegehäuse
- 71: Abtriebshohlwelle, Schneckenrad
- 72: Schneckenwelle
- 73: Formschlussverbindung
- 74: Bohrung

- 90: Innenraum
- 91: Axialrillenkugellager
- 92: Flansch
- 93: Aufnahmeabschnitt
- 95: Lagerelemente
- 96: Klemmelemente
- 98: hinteres Ende
- 99: vorderes Ende
- 100: Zentrierelement
- 101: Schrauben
- 140: Absatz
- 141: zylindrischer Abschnitt
- 142: Befestigungsabschnitt
- 143: Mutter

- 910: erster Lagerring
- 911: mittlerer Lagerring
- 912: zweiter Lagerring
- 913: Kugeln

## Patentansprüche

1. Linearantrieb umfassend eine Spindel (1) mit einem Gewindeabschnitt (12), die eine Mittelachse (M) definiert, eine mit dem Gewindeabschnitt (12) im Eingriff stehende Spindelmutter (4), ein Teleskopgestänge mit einem äusseren Teleskoprohr (2) und einem inneren Teleskoprohr (3), ein Getriebe (7) und einen Antriebsmotor (8), der mit dem Getriebe (7) in Verbindung steht, wobei
das äussere Teleskoprohr (2) relativ zum inneren Teleskoprohr (3) in Richtung der Mittelachse (M) verschiebbar angeordnet ist, so dass die Länge des Linearantriebes veränderbar ist,
wobei das innere Teleskoprohr (3) mit einer ersten Lagerstelle (5) in Verbindung steht, über welche eine Axialkraft im wesentlichen in Richtung der Mittelachse (M) auf das innere Teleskoprohr (3) einleitbar ist, welche dann durch das innere Teleskoprohr (2) über die Spindelmutter (4) auf die Spindel (1) übertragen wird,
wobei die Spindel (1) über ein Axiallager (91) mit einer zweiten Lagerstelle (6) in Verbindung steht, wobei das Axiallager (91) zur Übertragung von Axialkräften von der Spindel (1) auf die zweite Lagerstelle (6) ausgebildet ist, wobei das Getriebe (7) mindestens eine Abtriebshohlwelle (71) umfasst, wobei die Spindel (1) mit der Abtriebshohlwelle (71) verbunden ist, und wobei die Abtriebshohlwelle (71) an der Spindel (1) derart gelagert ist, dass diese bezüglich der Mittelachse (M) drehfest zur Spindel (1) ist, **dadurch gekennzeichnet, dass** das Getriebe als Schneckengetriebe mit einem Schneckenrad (71) ausgebildet ist, wobei das Schneckenrad (71) die Abtriebshohlwelle ist und die Abtriebshohlwelle (71) derart mit der Spindel (1) in Verbindung steht, dass eine axiale Verschiebung zwischen Abtriebshohlwelle (71) und Spindel (1) möglich ist, und dass ausschliesslich Drehmomente von der Abtriebshohlwelle bzw. vom Schneckenrad (71) auf die Spindel (1) übertragbar sind, wobei die Verbindung zwischen Spindel (1) und Schneckenrad (71) als eine Formschlussverbindung vorgesehen ist, wobei die Übertragung von Axialkräften in Richtung der Mittelachse (M) von der Spindel (1) auf das Schneckenrad (71) verhindert wird.

2. Linearantrieb nach Anspruch 1, **dadurch gekennzeichnet, dass** die Spindel (1) und die Abtriebshohlwelle (71) Mitnahmeelemente umfassen, welche ein Drehmoment von der Abtriebshohlwelle (71) auf die Spindel (1) übertragen, wobei sich die Mitnahmeelemente in die Spindel (1) und/oder in die Abtriebshohlwelle (71) erstrecken können bzw. von der Spindel (1) und/oder von der Abtriebshohlwelle (71) erstrecken können.

3. Linearantrieb nach einem der vorhergehenden Ansprüche, **dadurch gekennzeichnet, dass** die Verbindung zwischen Spindel (1) und Abtriebshohlwelle (71) eine Passfederverbindung oder eine Passscheibenverbindung oder eine Profilwellenverbindung ist, wobei die Verbindung derart ausgebildet ist, dass eine axiale Verschiebung zwischen Abtriebshohlwelle (71) und Spindel (1) zugelassen wird.

4. Linearantrieb nach einem der vorhergehenden Ansprüche, **dadurch gekennzeichnet, dass** die Abtriebshohlwelle (71) eine Öffnung (74) umfasst, durch welche die Spindel (1) hinein bzw. hindurch ragt, wobei die Öffnung (74) einen grösseren Durchmesser als die Spindel (1) im entsprechenden Bereich aufweist.

5. Linearantrieb nach einem der vorhergehenden Ansprüche, **dadurch gekennzeichnet, dass** die zweite Lagerstelle (6) als Lagergehäuse (9) ausgebildet ist, in welchem das Axiallager (91) angeordnet ist, so dass die Axialkräfte vom Axiallager (91) über das Lagergehäuse (9) leitbar sind.

6. Linearantrieb nach einem der vorhergehenden Ansprüche, **dadurch gekennzeichnet, dass** das Schneckengetriebe (7) mit dem Getriebegehäuse (70), dem Schneckenrad (71) und der Schneckenwelle (72) eine einzige Einheit darstellt, wobei diese Einheit als Ganzes von der Spindel (1), dem Teleskopgestänge (2, 3), und der zweiten Lagerstelle (6) bzw. dem Lagergehäuse (9) trennbar ist.

7. Linearantrieb nach einem der vorhergehenden Ansprüche, **dadurch gekennzeichnet, dass** das Drehmoment im Bereich eines Antriebsabschnittes (13) auf die Spindel (1) gelenkt wird, und dass die Axialkraft im Bereich eines Lagerabschnittes (14) von der Spindel (1) auf das Axiallager geleitet werden.

8. Linearantrieb nach Anspruch 7, **dadurch gekennzeichnet, dass** der Antriebsabschnitt (13) zwischen dem Gewinde (12) und dem Lagerabschnitt (14) ist, oder dass der Lagerabschnitt (14) zwischen dem Gewinde (12) und dem Antriebsabschnitt (13) ist.

9. Linearantrieb nach einem der vorhergehenden Ansprüche, **dadurch gekennzeichnet, dass** das Axiallager ein Axialrillenkugellager ist.

10. Linearantrieb nach einem der vorhergehenden Ansprüche, **dadurch gekennzeichnet, dass** die erste Lagerstelle (5) und/oder die zweite Lagerstelle (6) als Kolbenstangengelenk oder ein Gabelkopf ist.

11. Linearantrieb nach einem der vorhergehenden Ansprüche, **dadurch gekennzeichnet, dass** die zweite Lagerstelle (6) am Lagergehäuse angeformt ist.

## Claims

1. Linear drive, comprising a spindle (1) with a threaded portion (12), the said spindle defining a mid-axis (M), a spindle nut (4) which is in engagement with the threaded portion (12), a telescopic rod assembly with an outer telescopic tube (2) and with an inner telescopic tube (3), a gear (7) and a drive motor (8) which is connected to the gear (7), the outer telescopic tube (2) being arranged displaceably in relation to the inner telescopic tube (3) in the direction of the mid-axis (M), so that the length of the linear drive can be varied, the inner telescopic tube (3) being connected to a first bearing point (5), via which an axial force can be introduced essentially in the direction of the mid-axis (M) to the inner telescopic tube (3) and is then transmitted by the inner telescopic tube (3) to the spindle (1) via the spindle nut (4), the spindle (1) being connected to a second bearing point (6) via an axial bearing (91), the axial bearing (91) being designed for the transmission of axial forces from the spindle (1) to the second bearing point (6), the gear (7) comprising at least one hollow output shaft (71), the spindle (1) being connected to the hollow output shaft (71), and the hollow output shaft (71) being mounted on the spindle (1) in such a way that it is fixed in terms of rotation in relation to the spindle (1) with respect to the mid-axis (M), **characterized in that** the gear is designed as a worm gear with a worm wheel (71), the worm wheel (71) being the hollow output shaft, and the hollow output shaft (71) being connected to the spindle (1) in such a way that axial displacement between the hollow output shaft (71) and spindle (1) is possible, and **in that** only torques can be transmitted from the hollow output shaft or worm wheel (71) to the spindle (1), the connection between the spindle (1) and worm wheel (71) being provided as a form-fitting connection, the transmission of axial forces in the direction of the mid-axis (M) from the spindle (1) to the worm wheel (71) being prevented.

2. Linear drive according to Claim 1, **characterized in that** the spindle (1) and the hollow output shaft (71) comprise take-up elements which transmit a torque from the hollow output shaft (71) to the spindle (1), and in which case the take-up elements may extend into the spindle (1) and/or into the hollow output shaft (71) or may extend from the spindle (1) and/or from the hollow output shaft (71).

3. Linear drive according to one of the preceding claims, **characterized in that** the connection between the spindle (1) and the hollow output shaft (71) is a feather-key connection or shim connection or profile-shaft connection, the connection being designed in such a way that axial displacement between the hollow output shaft (71) and spindle (1) is permitted.

4. Linear drive according to one of the preceding claims, **characterized in that** the hollow output shaft (71) comprises an orifice (74), into which or through which the spindle (1) projects, the orifice (74) having a larger diameter than the spindle (1) in the corresponding region.

5. Linear drive according to one of the preceding claims, **characterized in that** the second bearing point (6) is designed as a bearing housing (9) in which the axial bearing (91) is arranged, so that the axial forces can be conducted from the axial bearing (91) via the bearing housing (9).

6. Linear drive according to one of the preceding claims, **characterized in that** the worm gear (7) together with the gear housing (70), with the worm wheel (71) and with the worm shaft (72) constitutes a single unit, this unit being separable as a whole from the spindle (1), the telescopic rod assembly (2, 3) and the second bearing point (6) or bearing housing (9).

7. Linear drive according to one of the preceding claims, **characterized in that** the torque is guided to the spindle (1) in the region of a drive portion (13), and **in that** the axial force is conducted from the spindle (1) to the axial bearing in the region of a bearing portion (14).

8. Linear drive according to Claim 7, **characterized in that** the drive portion (13) is between the thread (12) and the bearing portion (14), or **in that** the bearing portion (14) is between the thread (12) and the drive portion (13).

9. Linear drive according to one of the preceding claims, **characterized in that** the axial bearing is an axial grooved ball bearing.

10. Linear drive according to one of the preceding claims, **characterized in that** the first bearing point (5) and/or the second bearing point (6) is designed as a piston-rod joint or a fork head.

11. Linear drive according to one of the preceding claims, **characterized in that** the second bearing point (6) is integrally formed on the bearing housing.

## Revendications

1. Entraînement linéaire comprenant une broche (1) avec une portion filetée (12), qui définit un axe médian (M), un écrou de broche (4) en prise avec la portion filetée (12), une tringlerie télescopique avec un tube télescopique extérieur (2) et un tube télescopique intérieur (3), une transmission (7) et un moteur d'entraînement (8), qui est en liaison avec la transmission (7),
le tube télescopique extérieur (2) étant disposé de manière déplaçable par rapport au tube télescopique intérieur (3) dans la direction de l'axe médian (M), de sorte que la longueur de l'entraînement linéaire puisse être modifiée,
le tube télescopique intérieur (3) étant en liaison avec un premier point de palier (5), par le biais duquel une force axiale peut être introduite essentiellement dans la direction de l'axe médian (M) sur le tube télescopique intérieur (3), laquelle est ensuite transmise par le tube télescopique intérieur (3) par le biais de l'écrou de broche (4) à la broche (1),
la broche (1) étant en liaison par le biais d'un palier axial (91) avec un deuxième point de palier (6), le palier axial (91) étant réalisé de manière à transmettre des forces axiales de la broche (1) au deuxième point de palier (6), la transmission (7) comprenant au moins un arbre creux de sortie (71), la broche (1) étant connectée à l'arbre creux de sortie (71), et l'arbre creux de sortie (71) étant monté sur la broche (1) de telle sorte que celui-ci soit solidaire en rotation avec la broche (1) par rapport à l'axe médian (M), **caractérisé en ce que** la transmission est réalisée sous forme de transmission à vis sans fin avec une roue à denture hélicoïdale (71), la roue à denture hélicoïdale (71) étant l'arbre creux de sortie et l'arbre creux de sortie (71) étant en liaison avec la broche (1) de telle sorte qu'un déplacement axial entre l'arbre creux de sortie (71) et la broche (1) soit possible, et qu'exclusivement des couples puissent être transmis de l'arbre creux de sortie ou de la roue à denture hélicoïdale (71) à la broche (1), la connexion entre la broche (1) et la roue à denture hélicoïdale (71) étant prévue en tant que liaison à engagement par coopération de forme, le transfert de forces axiales dans la direction de l'axe médian (M) de la broche (1) à la roue à denture hélicoïdale (71) étant empêché.

2. Entraînement linéaire selon la revendication 1, **caractérisé en ce que** la broche (1) et l'arbre creux de sortie (71) comprennent des éléments d'entraînement qui transmettent un couple de l'arbre creux de sortie (71) à la broche (1), les éléments d'entraînement pouvant s'étendre dans la broche (1) et/ou dans l'arbre creux de sortie (71) ou pouvant s'étendre depuis la broche (1) et/ou depuis l'arbre creux de sortie (71).

3. Entraînement linéaire selon l'une quelconque des revendications précédentes, **caractérisé en ce que** la connexion entre la broche (1) et l'arbre creux de sortie (71) est une connexion à clavette parallèle ou à rondelle d'ajustage ou une connexion à arbre profilé, la connexion étant réalisée de telle sorte qu'un déplacement axial entre l'arbre creux de sortie (71) et la broche (1) soit autorisé.

4. Entraînement linéaire selon l'une quelconque des revendications précédentes, **caractérisé en ce que** l'arbre creux de sortie (71) comprend une ouverture (74) à travers laquelle la broche (1) pénètre ou passe, l'ouverture (74) présentant un plus grand diamètre que la broche (1) dans la région correspondante.

5. Entraînement linéaire selon l'une quelconque des revendications précédentes, **caractérisé en ce que** le deuxième point de palier (6) est réalisé sous forme de boîtier de palier (9) dans lequel le palier axial (91) est disposé, de sorte que les forces axiales peuvent être guidées depuis le palier axial (91) par le biais du boîtier de palier (9).

6. Entraînement linéaire selon l'une quelconque des revendications précédentes, **caractérisé en ce que** la transmission à vis sans fin (7), avec le boîtier de transmission (70), la roue à denture hélicoïdale (71) et l'arbre de la vis sans fin (72) constituent une unité d'un seul tenant, cette unité dans son ensemble pouvant être séparée de la broche (1), de la tringlerie télescopique (2, 3) et du deuxième point de palier (6) ou du boîtier de palier (9).

7. Entraînement linéaire selon l'une quelconque des revendications précédentes, **caractérisé en ce que** le couple dans la région d'une portion d'entraînement (13) est guidé sur la broche (1), et **en ce que** la force axiale dans la région d'une portion de palier (14) peut être guidée de la broche (1) vers le palier axial.

8. Entraînement linéaire selon la revendication 7, **caractérisé en ce que** la portion d'entraînement (13) est située entre la portion filetée (12) et la portion de palier (14), ou **en ce que** la portion de palier (14) est située entre la portion filetée (12) et la portion d'entraînement (13).

9. Entraînement linéaire selon l'une quelconque des revendications précédentes, **caractérisé en ce que** le palier axial sont un palier axial rainuré à billes.

10. Entraînement linéaire selon l'une quelconque des revendications précédentes, **caractérisé en ce que** le premier point de palier (5) et/ou le deuxième point de palier (6) sont une articulation à tige de piston ou une tête de fourche.

11. Entraînement linéaire selon l'une quelconque des revendications précédentes, **caractérisé en ce que** le deuxième point de palier (6) est façonné sur le boîtier de palier.
